(19) Europäisches Patentamt / European Patent Office / Office européen des brevets

(11) **EP 3 808 183 A1**

(12) **DEMANDE DE BREVET EUROPEEN**

(43) Date de publication:
21.04.2021 Bulletin 2021/16

(51) Int Cl.:
*A21D 2/26* (2006.01)   *A21D 13/064* (2017.01)
*A21D 13/80* (2017.01)   *A23C 23/00* (2006.01)

(21) Numéro de dépôt: 19306359.1

(22) Date de dépôt: 18.10.2019

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(71) Demandeur: SAVENCIA SA
78220 Viroflay (FR)

(72) Inventeurs:
• DA SILVA BOUCHER, Anne-Claire
78125 ORCEMONT (FR)

• MALKUS, Peter
013 41 Dolny Hricov (SK)
• AYMARD, Pierre
92160 ANTONY (FR)
• LACOTTE, Pierre
75002 Paris (FR)

(74) Mandataire: Gevers & Orès
Immeuble le Palatin 2
3 Cours du Triangle
CS 80165
92939 Paris La Défense Cedex (FR)

(54) **BISCUIT DE LAIT**

(57) La présente invention se rapporte à un produit alimentaire du type biscuit de lait principalement constitué d'ingrédients laitiers ayant des qualités organoleptiques, notamment croustillant et gonflement, d'un biscuit.

EP 3 808 183 A1

**Description**

La présente invention se rapporte au domaine de l'industrie alimentaire ; elle vise plus particulièrement un biscuit de lait et son procédé de fabrication.

En effet, la Demanderesse a mis au point des produits alimentaires dont l'apparence, la texture et les propriétés organoleptiques sont celles d'un biscuit alors que ces produits sont principalement constitués d'ingrédients laitiers.

Les biscuits sont des produits céréaliers élaborés à partir de farine, matières grasses et de sucres, ayant une humidité résiduelle faible (inférieure à 5% en poids).

Plus précisément, les biscuits sont généralement composés majoritairement de farine (15 à 75% en poids), le plus souvent de blé, de matières grasses (10 à 50% en poids) et de sucre (5 à 50% en poids). Selon l'équilibre entre farine, sucres et matières grasses d'une part et le niveau d'hydratation des pâtes d'autre part, on distingue plusieurs types de pâtes :

- Les pâtes dures ou semi-dures comportent au moins 50% de farine, ont une structure cohésive et continue avec une rhéologie ferme et plastique. Elles sont souvent laminées en couches fines avant d'être roto-découpées en pâtons individuels qui sont ensuite cuits.
- Les pâtes « grasses » ont une teneur en farine comprise entre 25% et 60% et des teneurs en sucres et matières grasses plus élevées (15 à 40%). Quand le niveau d'hydratation est faible, la pâte a un aspect sablé avec une structure non cohésive et friable. Il est d'usage de comprimer la pâte, le plus souvent dans une mouleuse rotative, pour obtenir un pâton manipulable qui est ensuite cuit. A une hydratation supérieure, la pâte retrouve une structure continue mais beaucoup plus souple que les pâtes dures et semi-dures. La pâte peut être poussée dans un cylindre (ce qui s'apparente à une extrusion à faible cisaillement) suivie par découpe de la pâte, typiquement à l'aide d'un coupe fil. Le pâton est généralement déposé sur une bande pleine sur laquelle il va s'étaler plus ou moins au cours de la cuisson.

D'autres ingrédients sont également utilisés en biscuiterie, comme les poudres levantes ou les émulsifiants. Malgré leur incorporation à une faible teneur dans la pâte à biscuit, ils ont un rôle essentiel sur la qualité des pâtes et des produits finis et sont indispensables à leur production.

Les poudres levantes sont des substances ou combinaison de substances qui libèrent des gaz au sein de la pâte au cours de la cuisson et contribuent à son expansion. Un exemple de substance est le bicarbonate d'ammonium qui se décompose à la chaleur en dioxyde de carbone et ammoniac sans laisser aucun résidu. Un exemple de combinaison est le mélange d'une base (de type carbonate ou bicarbonate) et d'un acide faible (de type acide tartrique ou pyrophosphate de sodium), mélange qui génère du dioxyde de carbone en présence d'eau et de chaleur.

Les émulsifiants sont des composés tensioactifs classiquement utilisés en biscuiterie. Ils ont différents rôles : au niveau technologique, ils facilitent la dispersion des matières grasses lors du pétrissage, augmentent la stabilité de la pâte lors du temps de repos et améliorent sa machinabilité lors du formage. Ils ont également un impact positif sur l'aspect du produit fini et sa conservation dans le temps (ralentissement potentiel de l'oxydation et de la rétrogradation de l'amidon).

Des ingrédients laitiers comme de la poudre de lait ou des lactosérums doux sont parfois ajoutés aux formulations biscuitières à des faibles doses (moins de 2% en poids de la pâte) pour apporter de la couleur et des arômes via la réaction de Maillard, initiée par l'interaction entre les protéines du lait et les sucres réducteurs. A des doses supérieures, les poudres de lait ou lactosérums doux ont tendance à colorer fortement les biscuits et à donner des textures dures et compactes, qui ne sont pas appréciées des consommateurs.

Le profil nutritionnel des biscuits a fait l'objet de nombreux travaux d'amélioration, visant notamment à réduire les teneurs en matières grasses et sucres et augmenter la teneur en fibres et en protéines. L'utilisation de protéines ayant une teneur élevée en lysine, comme les protéines laitières ou les protéines de légumineuses est particulièrement intéressante d'un point de vue nutritionnel car la lysine est un acide aminé essentiel déficitaire dans le blé et les céréales en général. Cependant, l'enrichissement en protéines s'avère, dans la majorité des cas, défavorable aux propriétés technologiques de la pâte et aux propriétés organoleptiques des biscuits. L'effet est d'autant plus marqué que la teneur en protéines incorporée est élevée. L'incorporation de protéines nécessite en général une augmentation de l'hydratation de la pâte du fait de leur forte capacité de rétention d'eau. La pâte devient instable pendant le temps de repos et difficile à former, ce qui diminue le rendement. Les conditions de cuisson (temps et/ou température) doivent également être modifiées afin d'évaporer l'eau supplémentaire ajoutée au pétrissage. L'effet texturant des protéines dans la pâte pénalise fortement le développement et des produits plus denses et plus durs sont obtenus. L'augmentation de dureté est encore accentuée quand les protéines gélifient au cours de la cuisson, renforçant ainsi la dureté de la matrice biscuitière, due à la combinaison des phénomènes de vitrification des sucres, d'insolubilisation des protéines de blé et de gonflement ou gélatinisation partielle de l'amidon.

Ces limitations techniques expliquent probablement pourquoi il n'existe pas de produit de type biscuitier à la fois riche en lait et riche en protéines, ayant une structure aérée et une texture croustillante. Les produits enrichis en protéines se présentent le plus souvent sous la forme de :

- barres sèches et croustillantes obtenues par l'incorporation de particules extrudées dans un liant sucré et gras, contenant des émulsifiants. Les inclusions extrudées sont mélangées au liant chaud pour obtenir une pâte souple, qui est étalée en plaques puis refroidie afin de durcir et enfin découpée en forme de barres. Il n'y a pas de réelle cuisson, seulement éventuellement un séchage, ce qui ne permet pas d'obtenir le profil aromatique de produits cuits. La texture en bouche est proche des céréales « petit déjeuner » (« Ready To Eat Cereals ») et l'aspect de la barre, très hétérogène, est très différent de celui d'un biscuit qui est en général plus lisse et continu.

- barres ayant une texture molle (« chewy ») et contenant des protéines sous forme de poudres et d'inclusions extrudées. La texture molle est due à une humidité résiduelle plus importante dans le produit fini (supérieure à 10%), ce qui est une solution technique à l'augmentation de dureté liée à l'incorporation de protéines. Ces barres contiennent un nombre important d'additifs, tels que des poudres levantes, émulsifiants, mais aussi des humectants et épaississants.

La présence de tous ces additifs est de moins en moins acceptée par les consommateurs qui cherchent des produits naturels et faiblement transformés. Par ailleurs, tous ces produits ont une forme (plutôt rectangulaire et épaisse), un aspect de surface (hétérogène) et une texture en bouche différents de celles des biscuits.

Un certain nombre de brevets décrivent des compositions sèches et croustillantes contenant des teneurs élevées en protéines.

US2003091698 A1 (Marsland) mentionne à juste titre que les procédés biscuitiers ont été dans leur ensemble conçus et adaptés pour des formulations riches en composés amylacés. Ceci pose selon les inventeurs des problèmes de santé publique tels qu'obésité, diabète, syndrome du côlon irritable, etc... La solution proposée est de remplacer les composés amylacés par des protéines de blé et d'autres protéines, de manière à obtenir une pâte extensible, pliable qui peut ensuite être laminée, découpée puis séchée à l'aide d'un procédé de friture, cuisson au four, cuisson micro-ondes, etc... jusqu'à l'atteinte de l'humidité résiduelle cible. Le produit fini contient au moins 25% de protéines en poids. Les protéines de blé sont connues pour leurs propriétés viscoélastiques marquées et un tel niveau d'incorporation aurait généré une pâte très élastique et impossible à former et découper. De fait, les inventeurs proposent d'intégrer dans la formulation des protéines de blé modifiées par des agents chimiques réducteurs qui ont pour effet de cliver des ponts disulfures et de perdre l'effet viscoélastique.

US2003064145 A1 (Fannon) reproche cependant au gluten d'être source d'intolérances alimentaires, d'avoir une valeur nutritionnelle limitée et insiste sur la nécessité d'obtenir un snack ayant de bonnes propriétés sensorielles, une teneur limitée en matière grasse et une forte teneur en protéines ayant un impact positif sur la santé. La solution technique proposée consiste à utiliser des protéines de soja, dont une fraction est hydrolysée, des protéines de céréales, un agent amylacé (de type farine de riz ou amidon de tapioca), un plastifiant (eau et/ou polyol). Les poudres sont hydratées puis le mélange est extrudé à l'aide d'un cuiseur extrudeur, avant d'être découpé, séché, aromatisé puis emballé. Les produits ont une teneur en protéines comprise entre 25% et 95% en poids de matière sèche, une teneur en matières grasses comprise entre 0.2% et 30% en poids de matière sèche et un ratio entre teneur en amidon et protéine compris entre 5:95 et 75:25, ce qui correspond à une teneur en amidon comprise entre 1.2% et 71.2% en poids. Une spécificité de l'invention est que le mélange extrudé ne doit pas contenir plus de 0.5% de matière grasse, le reste de la matière grasse étant appliqué à la surface du produit après l'extrusion. Les inventeurs ne donnent pas d'explication à cela, mais il est connu de l'homme de l'art que les compositions riches en matières grasses ne peuvent pas être extrudées car la matière grasse induit des phénomènes de glissement dans la vis de l'extrudeur, qui perturbent le processus d'extrusion en diminuant le cisaillement effectif perçu. Le fait que la matière grasse soit uniquement en périphérie du produit permet de contourner le problème mais peut néanmoins contribuer à donner une perception huileuse au toucher et un goût gras en bouche, rendant le produit peu attractif pour le consommateur.

La demande WO 2016/116426 (ProteiFood) se rapporte à un produit alimentaire de type biscuit ou gaufrette à longue conservation, sans farine de céréale et offrant une teneur en protéines et en sels minéraux nécessaire aux enfants, adultes, sportifs et personnes agées. La demande concerne un produit alimentaire expansé sec comprenant au moins les ingrédients suivants : un concentré protéique d'origine animale ou végétale, une matière grasse, un additif texturant -choisi parmi le groupe constitué des hydrocolloïdes et gélifiants végétaux, les additifs protéolytiques et leurs produits d'hydrolyse, les agents acidifiants et leurs sels, les maltodextrines- et de l'eau résiduelle. Le principe de l'invention consiste soit à mélanger le concentré protéique et la matière grasse (avec optionnellement d'autres ingrédients) avec un gélifiant (de type hydrocolloïde comme les carraghénanes, l'agar, etc... ou encore de type amidon, préférablement modifié), soit de traiter le concentré protéique par un agent protéolytique (de type présure notamment) et/ou un agent acidifiant (ferments ou acidifiant chimique) afin d'aboutir à une coagulation du dit-concentré protéique. Ces deux traitements s'effectuent dans les conditions opératoires de temps-température-cisaillement connues de l'homme de l'art. Dans les deux cas, l'objectif est, à la fin d'un certain temps de repos, d'obtenir un solide gélifié ayant une rhéologie suffisamment ferme pour être tranché ou râpé, opération éventuellement précédée par une phase de séchage partielle. Enfin, la dernière étape d'expansion est réalisée à l'aide d'un four micro-ondes.

La demande WO 2018/019954 (ProteiFood), des mêmes inventeurs que la demande WO 2016/116426, se distingue de celle-ci par l'absence d'additif texturant et de matière grasse. L'invention concerne également un procédé de fabrication d'un produit alimentaire expansé sec constitué de ou comprenant un concentré protéique d'origine animale ou végétale, de qualité alimentaire et de l'eau résiduelle. Le procédé de fabrication consiste à préparer un précurseur thermo-expansible constitué de ou comprenant un concentré protéique d'origine animale ou végétale et de l'eau, à une température comprise entre 4°C et 100°C et de soumettre le précurseur thermo-expansible à la chaleur, dans un équipement de type microondes, pour provoquer son expansion et la réduction de la teneur en eau jusqu'à une teneur résiduelle.

Les inventeurs indiquent que le précurseur thermo-expansible contient de préférence entre 15% et 50%, de préférence entre 20% et 40%, en poids de protéines mais ne précisent pas si d'autres ingrédients sont ajoutés ou bien si le complément est constitué d'eau ajoutée. Seule la teneur en eau résiduelle dans le produit fini est précisée (entre 3% et 10%). Le précurseur thermo-expansible obtenu, sous forme de pâte ou de gel, est éventuellement détaillé en morceaux, selon la forme et la taille du produit alimentaire expansé désirées. Les compositions de produits finis détaillés dans le Tableau récapitulatif des recettes indique des teneurs en protéines comprises entre 40% et 59%, des teneurs en matières grasses comprises entre 19% et 30% et une teneur en sucres comprises entre 1.3% et moins de 10%. Il est à noter que les Exemples 3 à 5 comportent de la Fibruline, nom commercial de l'inuline produite par le fournisseur Cosucra en Belgique. L'inuline est une fibre alimentaire et n'est pas considérée comme un glucide digestible tels que le lactose du lait ou le saccharose.

Dans le tableau suivant page 46, les Exemples 2 et 6 comportent une Maltodextrine de DE (Dextrose Equivalent) égal à 10. Il est connu que la teneur en mono et disaccharides de maltodextrines de DE 10 est inférieure à 10% de la masse totale de l'ingrédient, le reste étant composé de molécules ayant un degré de polymérisation DP au moins égal à 3. La teneur en mono et disaccharides dans tous les exemples reste donc inférieure à 10% dans tous les cas.

L'ensemble de l'état de l'art montre que de nombreuses tentatives de snack expansé et croustillant riche en protéines ont été proposées. Certaines analogies existent entre ces demandes. En termes de composition nutritionnelle, les compositions comportent une teneur élevée en protéines, mais à l'exception du WO 2018/019954 et des demandes antérieures associées, il ne s'agit pas de protéines laitières. De plus, cette forte teneur en protéines est obtenue via l'utilisation de concentrats ou d'isolats protéiques, c'est-à-dire d'ingrédients purifiés dans lesquels les composés indésirables ont été retirés. Par composé indésirable, on entend des composés qui ont une faible fonctionnalité technologique et diminuent l'efficience du procédé de fabrication. Le lactose peut être considéré comme tel dans les produits secs, du fait de sa solubilité très limitée. L'art antérieur nous enseigne donc qu'il est important de mettre en œuvre des ingrédients ayant des teneurs élevées en protéines afin de réussir à produire des snacks expansés riches en protéines. Par opposition, le lait écrémé en poudre, comportant environ 34% de protéines et plus de 50% de lactose, n'a jamais été incorporé dans ces snacks expansés, du fait de sa relative faible teneur en protéines et de sa teneur élevée en lactose.

Il est également courant de trouver des composés amylacés de type farine ou amidon, dont le rôle texturant et d'expansion dans un traitement thermique cuisson est bien connu. Par composé amylacé, on entend toute matière première ou ingrédient comprenant au moins 60% d'amidon en poids, ce qui inclut les différentes farines de céréales, légumineuses, pseudo-céréales ainsi que les amidons purifiés, obtenus après séparation de la fraction protéique présente dans les farines. Les amidons sont eux-mêmes composés de deux types de molécules en proportion variable (amylose et amylopectine) organisées en particules complexes dites pseudo-cristallines, c'est-à-dire partiellement cristallines et partiellement amorphes. A l'état natif, l'amidon se présente sous la forme de granules de l'ordre du micron à la dizaine de microns intégrés dans des tissus (endosperme des céréales par exemple) présent dans de nombreuses espèces botaniques dans lesquelles il tient lieu de réserve d'énergie. Les sources de composé amylacé les plus courantes sont les farines de céréales et notamment de blé. D'autres alternatives sont également utilisées telles que : d'autres farines de céréales, raffinées ou complètes : riz, maïs, avoine, orge, épeautre, petit épeautre, einkorn, triticale, ... ; des farines de pseudo-céréales (quinoa, amarante et sarrazin) ou légumineuses (pois, lentilles, haricots, pois-chiches). Les amidons et farines peuvent être soumis à des traitements physiques, enzymatiques et/ou chimiques qui modifient leurs propriétés technologiques notamment solubilité et pouvoir texturant.

L'utilisation de composés amylacés est souvent associée à l'utilisation d'additifs classiquement utilisés en biscuiterie, tels que des émulsifiants ou des agents levants.

Pour conclure, on peut distinguer d'une part des approches qui prennent comme point de départ l'univers biscuitier de référence et remplacent une partie des composés amylacés et/ou des sucres par des protéines, tout en en conservant une teneur suffisante pour garantir l'expansion et en s'aidant des additifs classiques tels qu'émulsifiant et agents levants. Une autre approche consiste à mettre en œuvre des concentrés protéiques sélectionnés et de les texturer à l'aide de gélifiants ou à les coaguler de manière à avoir une pâte ferme et solide qui peut être découpée puis séchée.

Dans les deux cas, le procédé d'expansion généralement sélectionné dans l'état de l'art est l'extrusion, bien connu de l'homme de l'art pour comprimer très fortement la pâte à l'intérieur du fourreau chauffé de l'extrudeur et générer de fait une forte détente en sortie d'extrudeur, ce qui vaporise brutalement l'eau contenue dans la formule et génère une forte expansion. Une alternative est l'utilisation de système microondes comme dans la demande WO 2018/019954. Les technologies mentionnées dans l'art antérieur (dont extrusion etmicroondes) ne font pas partie des technologies biscuitières classiques, qui sont une suite d'opérations simples, réalisées à pression atmosphérique : pétrissage pour obtenir une pâte (soit cohésive soit dispersée), formage pour obtenir un pâton individuel puis cuisson (en général dans un four à convection directe ou forcée) pour obtenir le niveau d'humidité résiduel souhaité.

Dans ce contexte, la Demanderesse s'est donnée pour objectif la mise au point de biscuit de lait principalement constitué d'ingrédients laitiers et dépourvu des additifs classiquement utilisés en biscuiterie ; l'obtention d'une texture type biscuitière à partir d'ingrédients majoritairement laitiers est surprenante car il est connu de l'homme du métier que l'incorporation d'ingrédients laitiers est défavorable à la préparation d'un biscuit de qualité. Outre l'impact négatif des protéines mentionné ci-dessus, le lactose pose également des problèmes technologiques et organoleptiques. Il est en effet dix fois moins soluble que le saccharose, ce qui limite fortement sa dissolution dans les pâtes pendant les phases de pétrissage et de formage. Il ne permet donc pas de diminuer l'hydratation des pâtes, ce que permet classiquement le saccharose et peut également donner un caractère sableux en bouche. La saveur sucrée du lactose est également beaucoup plus faible que celle du saccharose ce qui n'est pas apprécié par les consommateurs. C'est donc en surmontant ces préjugés que la Demanderesse a mis au point le biscuit de lait objet de la présente invention qui comprend :

- 30 à 50% en poids du poids total du biscuit de lait de protéines, dont au moins 80% sont d'origine laitière ;
- 12 à 45% en poids du poids total du biscuit de lait de mono- et/ou disaccharides, dont au moins 60% en poids desdits mono- et/ou disaccharides sont du lactose ;
- 2 à 40% en poids du poids total du biscuit de lait de lipides ;
- moins de 6% en poids du poids total du biscuit de lait d'eau ; ledit biscuit est tel
- qu'il comprend au moins 60% en poids du poids total du biscuit de lait d'ingrédients d'origine laitière ;
- qu'il a une densité apparente comprise entre 0,1 et 0,6 g/cm$^3$ ; et
- qu'il comprend moins de 10% en poids du poids total du biscuit de lait de composé amylacé ; et
- qu'il comprend moins de 1% en poids du poids total du biscuit de lait d'au moins un additif choisi parmi les poudres levantes et les émulsifiants.

De façon étonnante, une telle recette, principalement constituée d'ingrédients laitiers permet la préparation de produit alimentaire du type biscuit croustillant avec un gonflement marqué en mettant en œuvre des procédés industriels classiques et économiques en biscuiterie, tels que le procédé dit de « mouleuse-rotative » qui comporte une phase de pétrissage, de moulage de la pâte à l'aide d'une mouleuse rotative, puis de cuisson des pâtons et d'emballage des produits finis. Selon une modalité de l'invention, la recette est dépourvue de tout additif de type poudre levante ou émulsifiants utilisés lors de la fabrication de biscuits. Selon une autre modalité, la recette est également dépourvue de tout composé amylacé, c'est-à-dire de matière première ou ingrédient comprenant au moins 60% d'amidon en poids, ce qui inclut les différentes farines de céréales (blé, avoine, riz, maïs, orge, , etc...), légumineuses (pois, lentilles, pois chiche, féverole, haricots, etc...), pseudo-céréales (sarrasin, quinoa, amarante) ainsi que les amidons purifiés, obtenus après séparation de la fraction protéique présente dans les farines et optionnellement modifiés par voie physique, enzymatique ou chimique.

Les ingrédients d'origine laitière, qu'il s'agisse de protéines, de lipides, de mono- et disaccharides ou encore du calcium, peuvent provenir de produits dérivés du lait tels que du lait entier, du lait partiellement ou totalement écrémé, de la poudre de lait totalement ou partiellement écrémé, de la poudre de protéines de lait, du lait fermenté, de la matière grasse laitière, de la crème, du beurre, tout type de fromage... Ces ingrédients ont un intérêt nutritionnel bien connu, allant de la qualité des protéines (considérées comme des protéines de référence, avec un profil équilibré en acides aminés et une digestibilité élevée) à la teneur en minéraux tels que le calcium.

L'homme du métier saura tenir compte de la composition nutritionnelle de ces produits dérivés du lait pour se conformer à la composition du biscuit de lait.

Usuellement, les protéines d'origine laitière comprennent deux familles de protéines : les caséines, protéines majoritaires du lait (80% en masse des protéines du lait) et les protéines du sérum (20% en masse des protéines du lait), essentiellement β-lactoglobuline et α-lactalbumine.

Le biscuit de lait selon l'invention peut également comprendre des protéines d'origine non laitière comme des protéines d'origine végétale et notamment provenant des céréales (blé, avoine, riz, maïs, orge, , etc...), pseudo-céréales (quinoa, amarante, sarrazin), légumineuses (pois, lentilles, pois chiche, féverole, haricots, etc...), oléo-protéagineux (soja) et oléagineux (fruits secs et graines telles que colza, tournesol, lin, sésame, chia, etc...).

Par lipide, on entend une matière grasse d'origine laitière ou végétale, ou leur mélange ; dans le cas de l'utilisation d'une matière grasse végétale, il s'agira de préférence d'huiles telles que les huiles de colza, tournesol, tournesol oléique, olive, etc... ou matières grasses concrètes à semi-concrètes telles que beurre de cacao, beurre de karité, palme, palmiste, coprah, etc...

Classiquement, les mono- et disaccharides sont des sucres simples tels que le glucose, le fructose, le galactose, le maltose, le lactose, le saccharose ainsi que les sirops de glucose-fructose contenant des mélanges à différentes proportions de glucose, maltose, fructose, etc...

Dans le cadre de la présente invention, la densité apparente est évaluée en conditions tassée à l'aide d'un appareil AutoTap™ de la société Quantachrome. Le principe est de mesurer le volume d'une masse connue de biscuits de lait et d'en déduire la densité apparente. Pour ce faire, sept biscuits de lait sont précisément pesés (PE en g), puis recouverts de sable. L'ensemble est pesé de nouveau puis introduit dans une éprouvette cylindrique et « tassé » par des vibrations mécaniques (n=1000). A la fin de cette phase de tassement, la lecture de la hauteur de l'éprouvette (V en ml) permet de calculer la densité D des biscuits de lait, connaissant la densité du sable (Ds en kg.m$^{-3}$) et la quantité de sable (PS en g) ajoutée :

$$D = \frac{(PE \ x \ \frac{Ds}{1000})}{((V \ x \ \frac{Ds}{1000}) - PS)} x 1000$$

Par composé amylacé, on entend toute matière première ou ingrédient comprenant au moins 60% d'amidon en poids. Les amidons sont des glucides complexes digestibles composés de deux types de molécules en proportion variable (amylose et amylopectine). Les sources d'amidon les plus courantes sont les farines de céréales et notamment de blé. D'autres alternatives sont également utilisées telles que : d'autres farines de céréales, raffinées ou complètes : riz, maïs, avoine, orge, épeautre, petit épeautre, einkorn, triticale, ... ; des farines de pseudo-céréales (quinoa, amarante et sarrazin) ou légumineuses (pois, lentilles, haricots, pois-chiches) ; des amidons purifiés, obtenus à partir des farines après séparation des fraction protéiques et fibres ; des farines et/ou amidons modifiés par des traitements physiques, enzymatiques et/ou chimiques.

Par poudre levante, il est entendu des substances telles que le bicarbonate d'ammonium ou des mélanges de substances (de type carbonate ou bicarbonate de sodium, de potassium ou d'ammonium) et d'un acide faible (de type acide tartrique ou pyrophosphate de sodium). Au niveau réglementaire, ces poudres levantes sont des additifs en Europe et ont parfois des doses d'emploi limitées : Carbonates de sodium (E500 i, ii, iii), Carbonates de potassium (E501 i, ii), Carbonates d'ammonium (E503 i, ii), Carbonates de magnésium (E504 i, ii), Glucono-delta-lactone (E575), Acide tartrique (E331), Tartrate de sodium (E335 i, ii), Tartrate de potassium (E336 i, ii), Tartrate double de sodium et potassium (E337), Diphosphates ou Pyrophosphates (E450), Phosphate alumino-sodique (E541) (source : SYFAB, Syndicat national des Fabricants de Produits intermédiaires pour boulangerie, pâtisserie et viennoiserie, http://www.syfab.fr/ActiviteDetails.aspx?act=122&lid=5&rid=267). Du fait de leur réaction de production de gaz lors de la cuisson, les poudres levantes incorporées dans la pâte disparaissent totalement (exemple des carbonates d'ammonium) ou partiellement (cas des autres poudres levantes) lors de la cuisson. Dans le cadre de cette demande, les teneurs en poudres levantes éventuellement utilisées correspondantes aux valeurs mises en œuvre dans les pâtes et non à la concentration résiduelle des dites poudres levantes dans le produit fini.

Par émulsifiant, il est entendu des substances tensioactives qui, ajoutées à une denrée alimentaire, permettent de réaliser ou de maintenir le mélange homogène de deux ou plusieurs phases non miscibles, telles que l'huile et l'eau. Il s'agit de substances telles que la lécithine (E322), et les familles des mono- et diglycérides d'acides gras (E471) et esters de mono- et diglycérides d'acides gras (E472). A titre d'exemple, dans la catégorie des E472, on peut citer les esters lactiques de mono et diglycérides (E472b), les esters monoacétyltartrique et diacétyltartrique des mono et diglycérides d'acide gras (E472e) et les esters mixtes acétiques et tartriques des mono et diglycérides d'acide gras (E472f). D'autres émulsifiants possibles sont les sucroesters d'acides gras (E473), les sucro-glycérides (E474), les esters polyglycériques d'acides gras (E475), les esters propylène glycol (E477), les stéaroyl-2 Lactylate de sodium ou de calcium (E481, E482).

La Demanderesse a constaté que ces ingrédients -composés amylacés, poudre levante et émulsifiant- n'étaient pas nécessaires à la réalisation de l'invention et à l'obtention d'un biscuit de lait ayant des propriétés organoleptiques optimales, il n'est donc pas envisagé de les inclure dans la recette des biscuits de lait selon l'invention, notamment pour des raisons nutritionnelles ou encore pour obtenir une liste d'ingrédients courte et dépourvue d'additifs ; il est toutefois évident que leur éventuel ajout ne nuirait pas à la mise en œuvre de l'invention.

Selon des modes de réalisation particuliers, le biscuit de lait selon l'invention est tel qu'il contient :

- au moins 90%, 95%, 98% ou 100% en poids de protéines d'origine laitière par rapport au poids des protéines totales ; et/ou
- au moins 70%, 80%, 90%, 95%, 98% ou 100% d'ingrédients laitiers ; l'ingrédient d'origine non laitière est préférentiellement représenté par de la matière grasse végétale et/ou de saccharose ou d'autres matières sucrantes équivalentes ; et/ou

- entre 20 et 85% en poids du poids total du biscuit de lait de lait en poudre entier ou écrémé ; et/ou
- présente une densité apparente comprise entre 0,12 et 0,4 g/cm$^3$ ; 0,15 et 0,4 g/cm$^3$ et préférablement entre 0,15 et 0,35 g/cm$^3$ ; et/ou
- 0,8 à 1,3% en poids du poids total du biscuit de lait de calcium ; et/ou
- moins de 5%, préférentiellement moins de 1% en poids du poids total du biscuit de lait de composé amylacé, voire ne comprend pas de composé amylacé ; et/ou
- moins de 0,5%, de préférence moins de 0,1% en poids du poids total du biscuit de lait d'au moins un additif choisi parmi les poudres levantes et les émulsifiants ; et/ou
- comprend entre 20 et 85% en poids du poids total du biscuit de lait de lait en poudre entier ou écrémé.

Selon un autre mode de réalisation particulier, le biscuit de lait selon l'invention est tel que lesdits mono- et/ou disaccharides sont du lactose présent en une quantité comprise entre 12% à 30% en poids du poids total du biscuit de lait ; et lesdits lipides sont d'origine laitière.

Selon un mode de réalisation particulier, le biscuit de lait selon l'invention ne comprend pas d'additif choisi parmi les poudres levantes et les émulsifiants ; de préférence, le biscuit de lait selon l'invention ne comprend ni poudre levante, ni émulsifiant. Selon l'un de ces deux précédents modes de réalisation, le biscuit de lait selon l'invention ne comprend en outre pas d'additif alimentaire choisi parmi : gélifiant (substances qui, ajoutées à une denrée alimentaire, lui confèrent de la consistance par la formation d'un gel), épaississant (substances qui, ajoutées à une denrée alimentaire, en augmentent la viscosité), stabilisant (substances qui, ajoutées à une denrée alimentaire, permettent de maintenir son état physico-chimique), humectant (substances qui empêchent le dessèchement des denrées alimentaires en compensant les effets d'une faible humidité atmosphérique ou qui favorisent la dissolution d'une poudre en milieu aqueux), séquestrant (substances qui forment des complexes chimiques avec les ions métalliques) et sels de fonte (substances qui dispersent les protéines contenues dans le fromage, entraînant ainsi une répartition homogène des matières grasses et des autres composants). Parmi les substances concernées, nous pouvons citer les différents carraghénanes (iota, lambda, kappa), les galactomannanes (gommes guar, caroube, fenugrec, tara,), la gomme xanthane, les pectines, les amidons de différentes sources végétales (céréales, tubercules, légumineuses, ...) les amidons modifiés, les polyols, ...

Selon un mode de réalisation particulier, le biscuit de lait selon l'invention est constitué de :

- 30 à 50% en poids du poids total du biscuit de lait de protéines, dont au moins 80% sont d'origine laitière ;
- 12 à 45% en poids du poids total du biscuit de lait de mono- et/ou disaccharides, dont au moins 60% en poids desdits mono- et/ou disaccharides sont du lactose ;
- 2 à 40% en poids du poids total du biscuit de lait de lipides ;
- 0,8 à 1,3% en poids du poids total du biscuit de lait de calcium ;
- moins de 6% en poids du poids total du biscuit de lait d'eau ;

ledit biscuit est tel

- qu'il comprend au moins 60% en poids du poids total du biscuit de lait d'ingrédients d'origine laitière ; et
- qu'il a une densité apparente comprise entre 0,1 et 0,6 g/cm$^3$.

De façon avantageuse, la forte teneur en ingrédient laitier ne porte pas préjudice à la structure et à la texture des biscuits selon l'invention ; au contraire, la Demanderesse est parvenu à préparer des biscuits ayant des structures variées allant de la structure creuse, totalement ou partiellement évidée, c'est-à-dire que leur intérieur est constitué d'une cavité unique ou de plusieurs larges cavités, à des biscuits avec une multitude de cavités plus ou moins grandes qui ne communiquent pas entre elles (texture mousseuse).

De façon surprenante, la préparation de biscuit de lait ne requiert pas d'adaptation significative des procédés industriels classiquement mis en œuvre dans la filière biscuit ; ceci s'avère très avantageux économiquement puisqu'il n'est pas nécessaire d'investir dans de nouveaux appareillages pour produire les biscuits de lait de l'invention.

Ce résultat est inattendu car l'obtention d'un produit expansé via l'utilisation d'une mouleuse rotative n'est pas évidente pour un biscuitier ; en effet, dans ce type de procédé la pâte a une structure sablée et discontinue, c'est-à-dire qu'elle se présente sous la forme d'un matériau granulaire, constitué de particules indépendantes de taille variable qui en l'état ne forment pas une structure continue qui puisse être manipulée. Il est donc nécessaire de comprimer fortement ces particules sous pression dans le cylindre empreinte pour obtenir un pâton continu, mais qui reste fragile et peu cohésif. Après formage, les pâtons sont récupérés sur un tapis et envoyés directement dans le four, sans aucune manipulation supplémentaire, telle que découpe ou autre. La forte compression dans la mouleuse-rotative confère à la pâte une densité élevée (typiquement au moins égale à 1.1 g/cm$^3$), ce qui pénalise le développement du produit au four. De plus la quantité d'eau ajoutée dans le cas de pâtes sablées est limitée, donc la vaporisation de l'eau n'est pas un moteur suffisant pour générer la levée du produit. La solution technique classiquement utilisée en biscuiterie consiste donc à utiliser une quantité parfois importante de poudres levantes (jusqu'à 1% en poids de la pâte) de manière à expanser le produit en cours de cuisson. Dans le cas de l'invention, même sans utilisation d'agent levant, une expansion est tout de même observée malgré la structure sablée discontinue de la pâte et la forte compression dans la mouleuse rotative.

De plus et de manière surprenante, avec le procédé de l'invention, la pâte comprimée par le moulage génère dans certaines conditions une coque creuse à la cuisson, ce qui n'est pas généralement observé dans les produits de cuisson céréaliers (qui possèdent une structure interne multi-alvéolaire relativement homogène).

Il existe d'autres technologies d'expansion de type extrusion, soufflage, poppage, expansion sous vide, mais aucune d'entre elles ne conduit à l'obtention d'une coque creuse. Les technologies d'obtention de coques connues sont d'une part le moulage à froid (type chocolat, cold moulding) ou à chaud (type gaufrettes) mais aucune de ces technologies ne s'appliquent aux compositions laitières ou fromagères de l'invention. De plus, en général, les technologies de moulage nécessitent une première phase de moulage de demi-coques qui sont ensuite assemblées pour créer la coque finale. Dans le cas de l'invention, la coque est réalisée en une seule étape.

Enfin, la forte teneur en lactose du biscuit de lait n'est pas avantageuse, du fait de la faible solubilité de ce sucre dans l'eau. Les biscuitiers utilisent traditionnellement du saccharose qui a une solubilité élevée (10 fois supérieure à celle du lactose) voire des sirops de sucre inverti ou des sirops de glucose fructose quand ils souhaitent être assurés de mettre en œuvre des sucres dissous. L'utilisation de lactose en quantité significative va donc clairement à l'encontre de l'expérience de l'homme de l'art.

La présente invention se rapporte donc également à un procédé de préparation d'un biscuit de lait tel que décrit précédemment comprenant notamment les étapes de :

> a- mélange des ingrédients pour obtenir une pâte ; optionnellement, il y a application d'un temps d'attente à l'issue de la préparation de la pâte et avant son formage ;
> b- formage de la pâte
> c- découpe de la pâte ;
> d- optionnellement, pré-séchage de la pâte découpée ; par exemple, le pré-séchage en enceinte à température et hygrométrie contrôlée entre 50 et 70°C, 5 à 10% HR ;
> e- cuisson au four ;
> f- optionnellement, séchage jusqu'à atteinte de l'humidité cible ;
> g- optionnellement, ajout d'inclusions en surface, sprayage de la surface, trempage dans un autre fluide, comme par exemple du chocolat fondu ou un analogue, etc...

Par « analogue » de chocolat, on entend un produit similaire au chocolat mais où le beurre de cacao est remplacé par d'autres matières grasses, d'origine végétale ou animale.

Le formage et la découpe de la pâte sont réalisés à l'aide d'appareillages usuels de la filière biscuiterie et connus de l'homme du métier ; plusieurs outils sont possibles selon l'aspect et la consistante de la pâte, eux-mêmes fonction de la formule et du niveau d'hydratation (quantité d'eau ajoutée lors du pétrissage) :

> *dans le cas d'une pâte sablée non continue (particules individuelles ne formant pas de réseau continu dans lequel des pâtons peuvent être découpés), le formage pourra être réalisé par mouleuse rotative ;
> *dans le cas d'une pâte continue pouvant être étirée, comprimée et découpée, le formage pourra être réalisé par laminage en couche fine puis roto-découpe si la pâte est suffisamment ferme ou encore compression dans un cylindre volumétrique et découpe à l'aide d'un coupe-fil ou d'un iris si la pâte est plus souple. Dans ce dernier cas, l'utilisation d'une co-extrusion est également possible, ce qui permet d'avoir un fourrage (ou une autre pâte) disposée à l'intérieur de la composition et ce de manière concentrique. La composition selon l'invention peut être la pâte interne ou externe d'un produit co-extrudé.

Le biscuit de lait obtenu par le procédé selon l'invention peut bien entendu être ensuite conditionné pour sa conservation et son transport.

Exemples de préparation de biscuits de lait selon l'invention

1- Formule type I :

Ingrédients : Lait entier (35%), poudre de lait écrémé (29%), poudre de protéine de lait (12%), matière grasse végétale (12%), sucre (10%).

Composition nutritionnelle :

| Protéines | 35g/100g |
|---|---|
| - Dont protéines laitières | - 35 g/100g |
| Sucres | 40g/100g |
| - Dont lactose | - 27 g/100g |
| - Dont saccharose | - 13 g/100g |
| Lipides | 16g/100g |
| - Dont lipides laitiers | - 1 g /100 g |
| - Dont lipides végétaux | - 15 g /100 g |
| Calcium | 1100mg/100g |
| Eau | 3g/100g |

Caractérisation du produit : produit gonflé sous forme de cavité creuse, croustillant et dispersant, au goût laitier. Densité apparente selon le protocole de mesure de 0.17g/cm$^3$. La teneur en poudre de lait écrémé + lait entier sec dans les produit fini est de 46% (respectivement 39% et 7%).

### 2- Formule type II :

Ingrédients : Parmesan (40%), poudre de lait écrémé (16.5%), eau (22.7%), poudre de protéine de lait (10%), sel (0.8%).

Composition nutritionnelle :

| Protéines | 43g/100g |
|---|---|
| - Dont protéines laitières | - 43 g/100g |
| Sucres | 30g/100g |
| - Dont lactose | - 30 g/100g |
| Lipides | 10g/100g |
| - Dont lipides laitiers | - 10 g /100 g |
| Calcium | 1100mg/100g |
| Eau | 3g/100g |

Caractérisation du produit : produit gonflé sous forme de cavité creuse, croustillant et dispersant, au goût de parmesan gratiné. Densité apparente selon le protocole de mesure de 0.15g/cm$^3$. Le produit fini contient 25% de poudre de lait écrémé.

### 3- Formule type III :

Ingrédients : Poudre de lait écrémé (60%), eau (28%), poudre de protéine de lait (2%), matière grasse végétale (10%).

Composition nutritionnelle :

| Protéines | 32g/100g |
|---|---|
| - Dont protéines laitières | - 32 g/100g |
| Sucres | 43g/100g |
| - Dont lactose | - 30 g/100g |
| - Dont saccharose | - 0 g /100g |
| Lipides | 14g/100g |
| - Dont lipides laitiers | - 0.5 g/100 g |
| - Dont lipides végétaux | - 13.5 g /100 g |
| Calcium | 1100mg/100g |
| Eau | 3g/100g |

Caractérisation du produit : Ce produit a une structure interne multi-alvéolaire différente des coques creuses des exemples précédents au goût de lait cuit sucré ;
Densité apparente selon le protocole de mesure de 0.38g/cm$^3$. Le produit fini contient 25% de poudre de lait écrémé.

### 4- Formule type IV :

Ingrédients : Poudre de lait écrémé (46%), eau (20%), gluten (10%), matière grasse végétale (12%), sucre (10%), poudre de protéine de lait (2%).

Composition nutritionnelle :

| Protéines | 32g/100g |
|---|---|
| - Dont protéines laitières | - 19 g/100g |
| Sucres | 43g/100g |
| - Dont lactose | - 30 g/100g |
| - Dont saccharose | - 13 g/100g |
| Lipides | 16g/100g |
| - Dont lipides laitiers | - 0.5 g/100 g |
| - Dont lipides végétaux | - 15.5 g /100 g |
| Calcium | 1100mg/100g |
| Eau | 3g/100g |

Caractérisation du produit : produit gonflé sous forme de cavité creuse, croustillant et dispersant, Densité apparente selon le protocole de mesure de 0.18g/cm$^3$. Le produit fini contient 38% de poudre de lait écrémé.

### 5- Formule type V :

Ingrédients : Poudre de lait écrémé (30%), eau (28%), amidon de mais (8%), matière grasse végétale (12%), sucre (10%), poudre de protéine de lait (12%).

Composition nutritionnelle :

| Protéines | 30g/100g |
|---|---|
| - Dont protéines laitières | - 30 g/100g |
| Sucres | 43g/100g |
| - Dont lactose | - 30 g/100g |
| - Dont saccharose | - 13 g/100g |
| Lipides | 16g/100g |
| - Dont lipides laitiers | - 0.5 g/100 g |
| - Dont lipides végétaux | - 15.5 g /100 g |
| Calcium | 1100mg/100g |
| Eau | 3g/100g |

Caractérisation du produit : produit gonflé sous forme de cavité creuse, croustillant et dispersant, Densité apparente selon le protocole de mesure de 0.18g/cm$^3$. Le produit fini contient 22% de poudre de lait écrémé.

**Revendications**

**1.** Biscuit de lait comprenant :

- 30 à 50% en poids du poids total du biscuit de lait de protéines, dont au moins 80% sont d'origine laitière ;

- 12 à 45% en poids du poids total du biscuit de lait de mono- et/ou disaccharides, dont au moins 60% en poids desdits mono- et/ou disaccharides sont du lactose ;

- 2 à 40% en poids du poids total du biscuit de lait de lipides ;

- moins de 6% en poids du poids total du biscuit de lait d'eau ;

ledit biscuit est tel

- qu'il comprend au moins 60% en poids du poids total du biscuit de lait d'ingrédients d'origine laitière ;

- qu'il a une densité apparente comprise entre 0,1 et 0,6 g/cm$^3$ ; et

- qu'il comprend moins de 10% en poids du poids total du biscuit de lait de composé amylacé ; et

- qu'il comprend moins de 1% en poids du poids total du biscuit de lait d'au moins un additif choisi parmi les poudres levantes et les émulsifiants.

2. Biscuit de lait selon la revendication 1 **caractérisé en ce qu'**il comprend entre 20 et 85% en poids du poids total du biscuit de lait de lait en poudre entier ou écrémé.

3. Biscuit de lait selon la revendication 1 ou la revendication 2, **caractérisé en ce que** les lipides comprennent de la matière grasse végétale.

4. Biscuit de lait selon l'une quelconque des revendications précédentes **caractérisé en ce qu'**il présente une densité apparente comprise entre 0,12 et 0,4 g/cm$^3$.

5. Biscuit de lait selon l'une quelconque des revendications précédentes **caractérisé en ce qu'**il comprend 0,8 à 1,3% en poids du poids total du biscuit de lait de calcium.

6. Biscuit de lait selon l'une quelconque des revendications précédentes **caractérisé en ce qu'**il comprend moins de 5%, préférentiellement moins de 1% en poids du poids total du biscuit de lait de composé amylacé ; et/ou moins de 0,5%, de préférence moins de 0,1% en poids du poids total du biscuit de lait d'au moins un additif choisi parmi les poudres levantes et les émulsifiants.

7. Biscuit de lait selon la revendication 1, **caractérisé en ce que** :

- lesdits mono- et/ou disaccharides sont du lactose présent en une quantité comprise entre 12% à 30% en poids du poids total du biscuit de lait ; et

- lesdits lipides sont d'origine laitière.

8. Biscuit de lait selon l'une quelconque des revendications précédentes, **caractérisé en ce qu'**il ne comprend pas au moins un additif choisi parmi les poudres levantes et les émulsifiants.

9. Biscuit de lait selon l'une quelconque des revendications précédentes, **caractérisé en ce qu'**il ne comprend pas de composé amylacé.

10. Procédé de préparation d'un biscuit de lait selon l'une quelconque des revendications 1 à 9, comprenant les étapes de :

a- mélange des ingrédients pour obtenir une pâte ;

b- formage de la pâte ;

c- découpe de la pâte ;

d- optionnellement, pré-séchage de la pâte découpée ;

e- cuisson au four ;

f- optionnellement, séchage jusqu'à atteinte de l'humidité cible ;

g- optionnellement, ajout d'inclusions en surface, sprayage de la surface et/ou ajout d'une couverture de chocolat ou analogue.

Europäisches Patentamt

European Patent Office

Office européen des brevets

# RAPPORT DE RECHERCHE EUROPEENNE

Numéro de la demande

EP 19 30 6359

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 237 401 A5 (KLOSTERFRAU BERLIN CHEM [DE]) 7 février 1975 (1975-02-07) <br> * page 1 * <br> * exemple 1 * <br> * revendications 1-9 * <br> ----- | 1-10 | INV. <br> A21D2/26 <br> A21D13/064 <br> A21D13/80 <br> A23C23/00 |
| A | FR 361 069 A (JAMES ROBINSON HATMAKER [FR]) 16 mai 1906 (1906-05-16) <br> * page 1 * <br> * revendication 1 * <br> ----- | 1-10 | |
| A | US 2019/059396 A1 (SMITH TUCKER [US]) 28 février 2019 (2019-02-28) <br> * alinéas [0009], [0010] * <br> * tableaux 3-5 * <br> * revendications 1,2,5-7 * <br> ----- | 1-10 | |
| A | WO 2009/129024 A2 (FRITO LAY NORTH AMERICA INC [US]; LICKER JONATHAN L [US] ET AL.) 22 octobre 2009 (2009-10-22) <br> * abrégé * <br> * exemples 1-8 * <br> * revendications 1,4,5,20-22 * <br> ----- | 1-10 | DOMAINES TECHNIQUES RECHERCHES (IPC) <br><br> A21D <br> A23C |
| A | GB 1 500 012 A (CHIARI & FORTI SPA) 8 février 1978 (1978-02-08) <br> * page 1, lignes 12-18,55-80 * <br> * page 2, lignes 90-10 * <br> * revendications 1-6 * <br> ----- | 1-10 | |
| A | EP 3 531 837 A1 (GENERALE BISCUIT [FR]) 4 septembre 2019 (2019-09-04) <br> * abrégé * <br> * revendications 1-7,31-34,39,49 * <br> ----- <br> -/-- | 1-10 | |

Le présent rapport a été établi pour toutes les revendications

| Lieu de la recherche | Date d'achèvement de la recherche | Examinateur |
|---|---|---|
| Munich | 16 mars 2020 | de La Tour, Camille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 30 6359

**DOCUMENTS CONSIDERES COMME PERTINENTS**

| Catégorie | Citation du document avec indication, en cas de besoin, des parties pertinentes | Revendication concernée | CLASSEMENT DE LA DEMANDE (IPC) |
|---|---|---|---|
| A | CN 104 855 465 A (XINJIANG WANGYUAN CAMEL MILK IND CO LTD) 26 août 2015 (2015-08-26) * Embodiment 7 * * Comparative example 1 * * revendications 1-10 * ----- | 1-10 | |
| A | CN 107 691 562 A (ZHENGLANQI CHANGHONG DAIRY PRODUCTS FACTORY; UNIV INNER MONGOLIA AGRI) 16 février 2018 (2018-02-16) * alinéas [0010] - [0014] * * exemples 1-3 * * revendications 1-4 * ----- | 1-10 | |
| A,D | WO 2018/019954 A1 (PROTEIFOOD S A [BE]) 1 février 2018 (2018-02-01) * abrégé * * exemples 1-10 * * revendications 1,5,8 * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 16 mars 2020 | de La Tour, Camille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 30 6359

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2020

| Document brevet cité au rapport de recherche | | Date de publication | Membre(s) de la famille de brevet(s) | | Date de publication |
|---|---|---|---|---|---|
| FR 2237401 | A5 | 07-02-1975 | AT | 325775 B | 10-11-1975 |
| | | | AU | 7095874 A | 08-01-1976 |
| | | | BE | 816563 A | 16-10-1974 |
| | | | CA | 1034422 A | 11-07-1978 |
| | | | CH | 580919 A5 | 29-10-1976 |
| | | | DD | 112347 A5 | 12-04-1975 |
| | | | DE | 2340333 A1 | 30-01-1975 |
| | | | ES | 428205 A1 | 16-08-1976 |
| | | | FR | 2237401 A5 | 07-02-1975 |
| | | | GB | 1438691 A | 09-06-1976 |
| | | | JP | S5048170 A | 30-04-1975 |
| | | | LU | 68000 A1 | 11-04-1975 |
| | | | US | 3976800 A | 24-08-1976 |
| | | | ZA | 7403930 B | 25-06-1975 |
| FR 361069 | A | 16-05-1906 | AUCUN | | |
| US 2019059396 | A1 | 28-02-2019 | AUCUN | | |
| WO 2009129024 | A2 | 22-10-2009 | AU | 2009236568 A1 | 22-10-2009 |
| | | | BR | PI0910653 A2 | 28-07-2015 |
| | | | CA | 2721731 A1 | 22-10-2009 |
| | | | CN | 102149287 A | 10-08-2011 |
| | | | EP | 2278886 A2 | 02-02-2011 |
| | | | ES | 2394674 T3 | 04-02-2013 |
| | | | RU | 2010146940 A | 27-05-2012 |
| | | | US | 2009263553 A1 | 22-10-2009 |
| | | | WO | 2009129024 A2 | 22-10-2009 |
| | | | ZA | 201007406 B | 28-12-2011 |
| GB 1500012 | A | 08-02-1978 | AUCUN | | |
| EP 3531837 | A1 | 04-09-2019 | CN | 109843070 A | 04-06-2019 |
| | | | EP | 3531837 A1 | 04-09-2019 |
| | | | JP | 2019528790 A | 17-10-2019 |
| | | | US | 2020054028 A1 | 20-02-2020 |
| CN 104855465 | A | 26-08-2015 | AUCUN | | |
| CN 107691562 | A | 16-02-2018 | AUCUN | | |
| WO 2018019954 | A1 | 01-02-2018 | AU | 2017302099 A1 | 31-01-2019 |
| | | | BE | 1024122 B1 | 16-11-2017 |
| | | | BR | 112019001618 A2 | 09-07-2019 |
| | | | CA | 3031035 A1 | 01-02-2018 |
| | | | CN | 109788765 A | 21-05-2019 |

EPO FORM P0460

Pour tout renseignement concernant cette annexe : voir Journal Officiel de l'Office européen des brevets, No.12/82

page 1 de 2

**ANNEXE AU RAPPORT DE RECHERCHE EUROPEENNE
RELATIF A LA DEMANDE DE BREVET EUROPEEN NO.**

EP 19 30 6359

16-03-2020

| Document brevet cité au rapport de recherche | Date de publication | Membre(s) de la famille de brevet(s) | Date de publication |
|---|---|---|---|
| | | EP 3490382 A1 | 05-06-2019 |
| | | JP 2019523021 A | 22-08-2019 |
| | | KR 20190035741 A | 03-04-2019 |
| | | PH 12019500157 A1 | 29-07-2019 |
| | | US 2019159477 A1 | 30-05-2019 |
| | | WO 2018019954 A1 | 01-02-2018 |

EPO FORM P0460

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003091698 A1, Marsland
- US 2003064145 A1, Fannon
- WO 2016116426 A
- WO 2018019954 A